# EUROPÄISCHE PATENTSCHRIFT

(11) **EP 3 811 752 B1**
(45) Veröffentlichungstag und Bekanntmachung des Hinweises auf die Patenterteilung: **23.02.2022**
(21) Anmeldenummer: 20401051.6
(22) Anmeldetag: 13.10.2020
(51) Int. Cl.: A01C 17/00, A01C 15/00, E01C 19/20

(54) **VERTEILMASCHINE**
DISTRIBUTION MACHINE
MACHINE D'ÉPANDAGE

(30) Priorität: 21.10.2019 DE 102019128361
(43) Veröffentlichungstag der Anmeldung: 28.04.2021
(73) Patentinhaber: Amazonen-Werke H. Dreyer SE & Co. KG, 49205 Hasbergen (DE)
(72) Erfinder: Bäumker, Herbert, 49176 Hilter (DE); Lampert, Tobias, 49545 Tecklenburg (DE)

(56) Entgegenhaltungen:
- WO-A1-2019/109189
- WO-A1-2020/102878
- US-A1- 2003 098 373
- US-A1- 2004 026 544

## Beschreibung

Die Erfindung betrifft eine Verteilmaschine gemäß dem Oberbegriff des Patentanspruches 1.

In einer Vielzahl von Anwendungsfällen, insbesondere in der Landwirtschaft, werden zum Verteilen von granularem Material, insbesondere Saatgut und/oder Dünger, auf einer Fläche Verteilmaschinen, insbesondere landwirtschaftliche Verteilmaschinen, eingesetzt. Die Verteilmaschinen, insbesondere als Schleuderstreuer ausgeführte Verteilmaschinen, sind hierzu vorzugsweise mittels eines Zugfahrzeuges ziehbar und/oder an einem solchen anbaubar ausgeführt. Das granulare Material ist hierbei aus zumindest einem Vorratsbehälter über zumindest eine einstellbare Dosiereinrichtung wenigstens einem Streuorgan, insbesondere einer Streuscheibe, zuführbar und/oder von dem Streuorgan auf der, insbesondere landwirtschaftlichen, Fläche ausbringbar.

Typischerweise weisen derartige Verteilmaschinen Übergabeeinrichtung auf, die vorzugsweise zwischen der Dosiereinrichtung und dem Streuorgan angeordnet und dazu eingerichtet sind, dass granulare Material, vorzugsweise nahezu unabhängig von äußeren Einflüssen, von der Dosiereinrichtung an das Streuorgan zu übergeben.

Eine derartige Verteilmaschine ist in der US 3 085 807 beschrieben. Die Verteilmaschine, insbesondere landwirtschaftliche Verteilmaschine, umfasst neben zumindest einem Vorratsbehälter zumindest eine einstellbare Dosiereinrichtung, insbesondere ein Transportband, mittels der das granulare Material, insbesondere Saatgut und/oder Dünger, zumindest einer Streuscheibe zuführbar ist. Die zumindest eine Streuscheibe ist um eine im Wesentlichen vertikale Drehachse rotatorisch antreibbar ausgebildet, wobei die zumindest eine zwischen der Dosiereinrichtung und der Streuscheibe angeordnete Übergabeeinrichtung dazu eingerichtet ist, dass granulare Material von der Dosiereinrichtung an die Streuscheibe zu übergeben. Die Übergabeeinrichtung ist hierbei zumindest teilweise als trichterförmige Rutsche ausgebildet und umfasst zumindest abschnittsweise wenigstens eine erste Seitenwand und wenigstens eine der ersten Seitenwand gegenüberliegende zweite Seitenwand. Mittels zumindest einer an die erste und zweite Seitenwand anschließend angeordnete Durchflussöffnung, ist das granulare Material auf der Streuscheibe auf einem, vorzugsweise definierten, Aufgabepunkt aufbringbar.

Besondres nachteilig an diesem Aufbau ist der Einfluss der Fördermenge der Dosiereinrichtung auf die Aufbringungsgenauigkeit des granularen Materials auf der Streuscheibe. Je nachdem wieviel von dem granularen Material durch die Übergabeeinrichtung gefördert wird, ist die Querverteilung und somit das gesamte Streubild von der Ausbringmenge negativ beeinflussbar. Darüber hinaus ist aufgrund des starren Aufbaus der Übergabeeinrichtung gar nicht und/oder zumindest nur mit großem Aufwand der Aufgabepunkt in Abhängigkeit von äußeren Einflüssen, beispielsweise Wind, und/oder Materialeigenschaften des auszubringenden Materials anpassbar. Dies wiederrum wirkt sich negativ auf die Querverteilung und damit auf das Streubild aus. Eine andere gattungsgemäße Verteilmaschine ist aus US 2003/098373 A1 bekannt.

Die der Erfindung zugrunde liegende Aufgabe besteht somit darin, eine Verteilmaschine der eingangs genannten Art so zu gestalten, dass ein nahezu gleich bleibendes Streubild bei variierender Fördermenge erreichbar ist.

Diese Aufgabe wird erfindungsgemäß dadurch gelöst, dass die wenigstens eine zweite Seitenwand zumindest einen in Richtung der ersten Seitenwand erstreckenden Vorsprung aufweist, wobei der Vorsprung und die Dosiereinrichtung derartig ausgebildet sind und sich zumindest teilweise über die Durchflussöffnung erstrecken, dass das granulare Material nahezu ausschließlich über die wenigstens eine erste Seitenwand in die Durchflussöffnung einleitbar ist.

Infolge dieser Maßnahme ist erreicht, dass die Zuführung des granularen Materials, vorzugsweise in Form zumindest eines gebündelten Förderstroms, zur Durchflussöffnung, nahezu ausschließlich über die zumindest eine erste Seitenwand der Übergabeeinrichtung erfolgt. Das von der Dosiereinrichtung, in die Übergabeeinrichtung übergebene Material das sich vertikal über der Durchflussöffnung befindet, ist mittels des Vorsprungs auf die zumindest eine erste Seitenwand umlenkbar. Der Vorsprung ist hierbei an der zumindest einen zweiten Seitenwand angeformt und/oder mit dieser zumindest teilweise verbindbar ausgeführt und dabei über der Durchflussöffnung, vorzugsweise zwischen der Durchflussöffnung und der Dosiereinrichtung, angeordnet. Durch diese Anordnung ist außerdem erreicht, dass Dosiereinrichtungen mit einer Breite realisierbar sind, bei der sich zumindest ein Teil der Dosiereinrichtung mit der Durchflussöffnung der zumindest einen Übergabeeinrichtung in vertikaler Richtung überschneidet. Darüber hinaus weisen die wenigstens eine erste Seitenwand und/oder der Vorsprung wenigstens eine Fläche auf die in Förderrichtung des granularen Materials eine zumindest teilweise abfallende Neigung aufweist. Alternativ oder zusätzlich sind mehrere unterschiedlich stark ausgeprägte Neigungen entlang der ersten Seitenwand und/oder des Vorsprungs denkbar. Somit ist eine individuellere Förderung des Materials innerhalb der Übergabeeinrichtung realisierbar.

Außerdem ist die Verwendung unterschiedlicher, insbesondere gehärteter, Materialien und/oder Beschichtungen innerhalb und/oder auf materialberührender Oberflächen der Übergabeeinrichtung denkbar. Diese können zum einen einer variablen Förderung des Materials und/oder zum anderen dem Verschleißschutz der Übergabeeinrichtung dienen.

Neben der zumindest einen Übergabeeinrichtung, die zwischen der Dosiereinrichtung und der Streuscheibe angeordnet ist, ist die Verwendung von zumindest einer weiteren Übergabeeinrichtungen bevorzugt. Die zumindest zwei Übergabeeinrichtungen sind dabei derart ausgebildet, dass das geförderte Material jeweils von einer Teilbreite der Dosiereinrichtung in die jeweilige zugeordnete Übergabeeinrichtung übergebbar ist. Alternativ ist außerdem denkbar, dass jeder Übergabeeinrichtung jeweils zumindest eine Dosiereinrichtung zugeordnet ist. Somit ist das von der zumindest einen Dosiereinrichtung geförderte Material auf mehrere Aufgabepunkte, vorzugsweise mehrerer Streuscheiben, aufteilbar. Hiermit wird eine gesteigerte Ausbringgenauigkeit und damit ein weiter verbessertes Streubild der Verteilmaschine erreicht.

In einer bevorzugten Ausführungsform der erfindungsgemäßen Verteilmaschine erstreckt sich die wenigstens eine erste Seitenwand über eine größere Breite der Dosiereinrichtung als die wenigstens eine zweite Seitenwand. Die Länge der zumindest einen ersten Seitenwand ist hierbei vom Betrag zumindest gleich, vorzugsweise größer, als die der zumindest einen zweiten Seitenwand. Mittels dieser Ausführung ist eine innerhalb der Übergabeeinrichtung außermittige Positionierung der Durchflussöffnung erreicht. Somit ist die zumindest eine erste Seitenwand mit besonders großer Länge und damit mit besonders großem Aufnahmevermögen für das granulare Material realisierbar.

In einer Weiterbildung der erfindungsgemäßen Verteilmaschine ist der zumindest einen Durchflussöffnung zumindest ein Prallelement zugeordnet, wobei die Durchflussöffnung mittels des Prallelementes in mehrere Teilöffnungen unterteilt ist. Das zumindest eine Prallelement ragt hierbei zumindest teilweise über und/oder in die zumindest eine Durchflussöffnung, wobei das Prallelement vorzugsweise zumindest teilweise korrespondierend zur wenigstens einen zweiten Seitenwand ausgerichtet ist. Darüber hinaus ist zumindest ein und/oder ein weiteres Parallelement denkbar, dass im Wesentlichen quer zum ersten Prallelement angeordnet ist. Somit ist die Durchflussöffnung in zumindest eine erste Teilöffnung, die der ersten Seitenwand zugewandt ist, und zumindest eine weitere Teilöffnung, die zwischen der ersten Teilöffnung und der zumindest einen zweiten Seitenwand angeordnet ist, aufteilbar. Das wenigstens eine Prallelement ist vorzugsweise zumindest teilweise kraft- und/oder form- und/oder stoffschlüssig mit der Übergabeeinrichtung verbunden. Alternativ und/oder zusätzlich ist zumindest ein an der Übergabeeinrichtung angeformtes Prallelement denkbar.

In einer anderen bevorzugten Ausführungsform der erfindungsgemäßen Verteilmaschine ist das granulare Material bei einer ersten Fördermenge über zumindest eine der mehreren Teilöffnungen und bei einer zweiten Fördermenge, die größer als die erste Fördermenge ist, über zumindest eine weitere der mehreren Teilöffnungen förderbar. Die erste und/oder zweite Fördermenge sind hierbei als bestimmte Grenzwerte für eine geförderte Menge an granularem Material zu verstehen, wobei mittels des Prallelementes nach dem unterschreiten bzw. überschreiten des zumindest einen Grenzwertes die Förderung innerhalb der Übergabeeinrichtung beeinflussbar ist. Außerdem ist das Material somit bis zum Erreichen einer ersten und/oder zweiten Fördermenge bzw. eines ersten und/oder zweiten Grenzwertes in zumindest einem gebündelten Förderstrom durch die Durchflussöffnung förderbar. Darüber hinaus ist zumindest ein Prallelement bevorzugt, dass sich in vertikaler Richtung nach unten, insbesondere korrespondierend zur zweiten Seitenwand, zumindest teilweise erstreckt. Infolge dieser Ausbildung ist eine Aufprallfläche für das quer zum Prallelement geförderte granulare Material geschaffen. Das somit gegen das Prallelement prallende granulare Material ist hierbei zumindest teilweise in eine nahezu ausschließliche vertikale Förderrichtung, insbesondere in Richtung der Streuscheibe, umlenkbar, womit eine noch weiter verbesserte Bündelung des Förderstroms erreicht ist.

In einer anderen Weiterbildung der erfindungsgemäßen Verteilmaschine weist die wenigstens eine erste Seitenwand zumindest eine in Längsrichtung verlaufende im Wesentlichen aufrecht hervorstehende Kante auf, wobei die wenigstens eine erste Seitenwand mittels der Kante in zumindest eine erste Rutschfläche und zumindest eine zweite Rutschfläche unterteilt ist. Die zumindest eine zweite Rutschfläche kann hierbei in vertikaler Richtung auf gleicher Höhe zur ersten Rutschfläche und/oder vorzugsweise über und/oder unter der ersten Rutschfläche angeordnet sein. Das granulare Material ist hierdurch in Abhängigkeit von der geförderten Menge zumindest teilweise über jeweils eine der mehreren Rutschflächen in die zumindest eine Durchflussöffnung einleitbar. Die wenigstens eine aufrecht hervorstehende Kante ist dabei vorzugsweise derartig ausgebildet, dass die wenigstens eine erste Rutschfläche mit der wenigstens einen zweiten Rutschfläche zumindest teilweise mittels der Kante verbunden sind. Die Höhe der Kante kann hierbei zumindest abschnittsweise schwankend oder vorzugsweise nahezu durchgängig gleich ausgeführt sein.

Des Weiteren ist in Richtung der Durchflussöffnung wenigstens eine zumindest teilweise sich ausweitende zweite Rutschfläche und dabei wenigstens eine zumindest teilweise sich verjüngende erste Rutschfläche bevorzugt.

In einer weiteren bevorzugten Ausführungsform der erfindungsgemäßen Verteilmaschine ist die zumindest eine erste Rutschfläche auf einer der Dosiereinrichtung zugewandten Seite angeordnet. Die jeweiligen Rutschflächen sind dabei entlang der zumindest einen ersten Seitenwand korrespondierend zueinander ausgebildet. Mittels dieser Anordnung ist ein besonders hoher Durchsatz an granularem Material innerhalb der Übergabeeinrichtung erreichbar.

In einer weiteren Weiterbildung der erfindungsgemäßen Verteilmaschine ist das granulare Material bei einer ersten und/oder zweiten Fördermenge über die zumindest eine erste Rutschfläche und bei einer dritten Fördermenge, die größer oder gleich der zweiten Fördermenge ist, zumindest teilweise über die zumindest eine zweite Rutschfläche förderbar. Die Höhe der zumindest einen aufrecht hervorstehenden Kante ist derartig ausgebildet, dass ein Anteil des granularen Materials erst nach dem überschreiten eines Grenzwertes einer geförderten Menge bzw. einer dritten Fördermenge über die Kante und somit auf der zumindest einen zweiten Rutschfläche förderbar ist. Über die Höhe der Kante ist die dritte Fördermenge somit, vorzugsweise variabel, anpassbar.

Darüber hinaus ist eine erfindungsgemäße Verteilmaschine bevorzugt bei der die Übergabeeinrichtung zumindest eine, vorzugsweise an die Durchflussöffnung anschließende, drehbare Trichterspitze umfasst und der Aufgabepunkt mittels der Trichterspitze konzentrisch zur Drehachse der Streuscheibe verstellbar ist. Die Trichterspitze ist hierbei zwischen der Durchflussöffnung und der zumindest einen Streuscheibe angeordnet, wobei zumindest ein im unteren Bereich angeordnetes Ende der Trichterspitze zumindest teilweise einen Abstand zur Streuscheibe aufweist. Der Abstand des unteren Bereichs der Trichterspitze zur Streuscheibe ist bevorzugt so gewählt, dass Wurfschaufeln, die auf der Streuscheibe im Wesentlichen aufrecht hervorstehend ausgebildet sind, mit der Trichterspitze zumindest nahezu nicht in Berührung kommen. Alternativ und/oder zusätzlich sind an dem unteren Bereich der Trichterspitze zumindest teilweise angeformte und/oder verbindbare Elemente, insbesondere Abstreiferelemente, denkbar, mittels derer auf den Wurfschaufeln absetzbares granulares Material und/oder Verunreinigungen zumindest teilweise abstreifbar sind. Die Trichterspitze ist in dieser Ausführungsform manuell, vorzugsweise händisch, und/oder automatisiert, vorzugsweise mittels eines Aktors, drehbar ausgebildet. Eine automatisierte Ausführung weist den Vorteil einer Aufgabepunktanpassung während des Betriebs der Verteilmaschine auf. Somit ist eine, vorzugsweise zumindest nahezu simultane, Korrektur des Aufgabepunktes und damit der Flugbahncharakteristik in Abhängigkeit unterschiedlicher Materialeigenschaften des granularen Materials und/oder äußeren Umwelteinflüssen realisierbar.

In einer anderen bevorzugten Ausführungsform der erfindungsgemäßen Verteilmaschine ist die Trichterspitze lösbar, vorzugsweise formschlüssig und/oder werkzeuglos, mit der trichterförmigen Rutsche koppelbar. Somit ist die Trichterspitze im Bedarfsfall, beispielsweise aufgrund unterschiedlicher Materialien des granularen Materials und/oder einer Reparatur aufgrund von Verschleißerscheinung besonders einfach austauschbar. Darüber hinaus erlaubt eine werkzeuglose Verbindungsform der Trichterspitze innerhalb der Übergabeeinrichtung eine besonders schnelle Montage und/oder Demontage der Trichterspitze. Diese Ausführung ist beispielsweise im Falle einer Reinigung der Trichterspitze besonders vorteilhaft.

Bei einer besonders bevorzugten Ausführungsform der erfindungsgemäßen Verteilmaschine ist die Trichterspitze, vorzugsweise feststellbar, zwischen zumindest zwei unterschiedlichen Positionen um die Drehachse verstellbar. Bevorzugt sind mehrere definierte Positionen zwischen denen die Trichterspitze verdrehbar ist und dabei vorzugsweise in zumindest einer der und/oder zwischen den Positionen feststellbar. Bei einer automatisierten Ausführungsform kann die Trichterspitze beispielsweise mittels des Aktors in einer Position gehalten werden, wobei die Position vorzugsweise sensorisch am Aktor und/oder an der Trichterspitze erfassbar ist. Bei einer manuell drehbaren Trichterspitze kann die Fixierung kraft- und/oder formschlüssig, vorzugsweise mittels einer Schraubverbindung und/oder einem einsteckbaren Bolzenstift, ausgebildet sein.

Darüber hinaus kann die Drehachse der Trichterspitze zumindest teilweise mit der Drehachse der Streuscheibe übereinstimmen oder alternativ korrespondierend zu dieser ausgebildet sein.

In einer besonders bevorzugten Weiterbildung der erfindungsgemäßen Verteilmaschine umfasst die Übergabeeinrichtung, insbesondere Trichterspitze, zumindest ein Anzeigemittel, wobei die Position der Trichterspitze um die Drehachse mittels des Anzeigemittels ablesbar ist. Das Anzeigemittel ist der Übergabeeinrichtung zugeordnet und dabei derart angeordnet, dass sie von einem Bediener innerhalb eines Zugfahrzeuges und/oder im Bereich der Übergabeeinrichtung optisch wahrnehmbar ist. Das Anzeigemittel ist dazu eingerichtet, die Position der Trichterspitze in einer analogen und/oder digitalen Darstellung anzuzeigen, wobei bei einer digitalen Darstellung die Position alternativ und/oder zusätzlich durch eine an der Verteilmaschine und/oder dem Zugfahrzeug vorhandene Anzeige darstellbar ist.

Darüber hinaus ist ein Anzeigemittel besonders bevorzugt welches eine von einem Bediener ablesbare Beschriftung und zumindest eine zusätzliche zur Beschriftung korrespondierende Kulisse aufweist. Ein bolzen- und/oder stiftförmiges Element ist hierbei zumindest teilweise durch die zumindest eine Kulisse steckbar, wobei zumindest ein Fixierelement auf der Unterseite des Anzeigemittels auf das bolzen und/oder stiftförmige Element aufbringbar ist. Besonders bevorzugt ist ein als Schraube ausgeführtes stifftröfmiges Element und ein Flügelmutter ausgeführtes Fixierelement das auf die Schraube aufschraubbar ist. Das Anzeigemittel und/oder die Trichterspitze sind somit auf einer vom Bediener einstellbaren Position besonders einfach und/oder sicher fixierbar.

Bei einer weiteren besonders bevorzugten Ausführungsform der erfindungsgemäßen Verteilmaschine weist die Trichterspitze zumindest eine Ausgabeöffnung auf über die das geförderte Material an den Aufgabepunkt auf die Streuscheibe übergebbar ist, wobei das granulare Material über wenigstens eine innenliegende Fläche der Trichterspitze zur Ausgabeöffnung förderbar ist. Die zumindest eine innenliegende Fläche ist hierbei derartig gegenüber einer Horizontalen geneigt, dass das granulare Material, vorzugsweise ohne eine zusätzlich ausgebildete Einwirkung, in Richtung der Ausgabeöffnung und somit zum Aufgabepunkt auf der Streuscheibe förderbar ist. Die zumindest eine Ausgabeöffnung ist hierbei bevorzugt derartig angeordnet, dass sich die Ausgabeöffnung der Trichterspitze und die Durchflussöffnung zwischen der trichterförmigen Rutsche und der Trichterspitze in vertikaler Richtung nicht überschneiden. Somit ist erreicht, dass in die Trichterspitze einleitbares Material nahezu ausschließlich über die zumindest eine innenliegende Fläche der Trichterspitze zur Streuscheibe förderbar ist.

In einer weiteren besonders bevorzugten Weiterbildung der erfindungsgemäßen Verteilmaschine weist die zumindest eine innenliegende Fläche der Trichterspitze zumindest ein Leitelement auf, wobei das geförderte Material mittels des Leitelementes, vorzugsweise bis zum Überschreiten einer vierten Fördermenge, zumindest teilweise in mehrere Förderströme aufteilbar ist. Die vierte Fördermenge kann hierbei einer der vorgenannten ersten bis dritten Fördermenge zumindest nahezu entsprechen oder auch von diesen abweichen. Das zumindest eine Leitelement ist mit der innenliegenden Fläche der Trichterspitze verbindbar und/oder an dieser angeformt ausgebildet, wobei das Leitelement im Wesentlichen aufrecht, vorzugsweise hervorstehend auf der innenliegenden Fläche, angeordnet ist. Bevorzugt ist ein Leitelement, das eine Breite und/oder Höhe aufweist, die sich in Richtung einer Mittel- und/oder Rotationsachse der Ausgabeöffnung zumindest abschnittsweise vergrößert. Somit ist eine besonders materialschonende Umlenkung des Förderstrom bzw. des geförderten granularen Materials innerhalb der Übergabeeinrichtung erreichbar. Mittels des Leitelementes ist eine zumindest teilweise Vergrößerung, insbesondere Verbreiterung, des Aufgabepunktes, insbesondere bei kleinen Fördermengen, erreichbar. Somit ist ein in Abhängigkeit der Fördermengen variierende Größe, insbesondere Breite, des Aufgabepunktes zumindest teilweise kompensierbar und damit die Aufbringgenauigkeit weiter gesteigert.

Bei einer weiteren vorteilhaften Ausführungsform der erfindungsgemäßen Verteilmaschine weist die Trichterspitze im Bereich und/oder anschließend an der Ausgabeöffnung zumindest ein Rückprallelement auf. Das Rückprallelement ist hierbei einteilig oder mehrteilig ausgebildet und mit der Trichterspitze zumindest teilweise verbunden und/oder an dieser angeformt. Das Rückprallelement ist dazu eingerichtet, auf der Streuscheibe auftreffendes und in Richtung der Übergabeeinrichtung zurückprallendes Material zumindest teilweise wieder an die Streuscheibe zu übergeben, so dass granulares Material nahezu ausschließlich über die zumindest eine Streuscheibe auf der, insbesondere landwirtschaftlichen, Fläche ausbringbar ist.

In einer weiteren vorteilhaften Weiterbildung der erfindungsgemäßen Verteilmaschine erstreckt sich das Rückprallelement zumindest teilweise von einer Außenkontur der Ausgabeöffnung in Richtung des Außenradius des Streutellers. Die Außenkontur des Rückprallelementes ist hierbei bevorzugt zumindest abschnittsweise kreisförmig, insbesondere im Wesentlichen korrespondierend zur Streuscheibe, ausgebildet. Das Rückprallelement ist dazu eingerichtet, die wenigstens eine Streuscheibe in vertikaler Richtung zumindest teilweise abzuschirmen. Somit ist erreicht, dass das auf die Streuscheibe einleitbare granulare Material zumindest teilweise im Bereich, vorzugsweise nahezu verlustfrei, auf der Streuscheibe gehalten werden kann und somit eine besonders hohe Fördergeschwindigkeit und/oder Fördermenge des granularen Materials erzielbar ist.

Weitere Einzelheiten der Erfindung sind der Beispielsbeschreibung und den Zeichnungen zu entnehmen. Die Zeichnungen zeigen
- Fig.1: eine von einem Zufahrzeug gezogene landwirtschaftliche Verteilmaschine in einer perspektivischen Ansicht;
- Fig. 2: eine erfindungsgemäße Übergabeeinrichtung an der in Fig. 1 gezeigten landwirtschaftlichen Verteilmaschine in einer perspektivischen Ansicht;
- Fig. 3: die Übergabeeinrichtung aus Fig. 2 in einer Ansicht von oben;
- Fig. 4: die Übergabeeinrichtung aus Fig. 3 in einer Schnittansicht von hinten;
- Fig. 5: die Übergabeeinrichtung aus Fig. 4 in einer Schnittansicht von der Seite; und
- Fig. 6: die Übergabeeinrichtung aus Fig. 4 in einer perspektivischen Schnittansicht mit einer Streuscheibe.

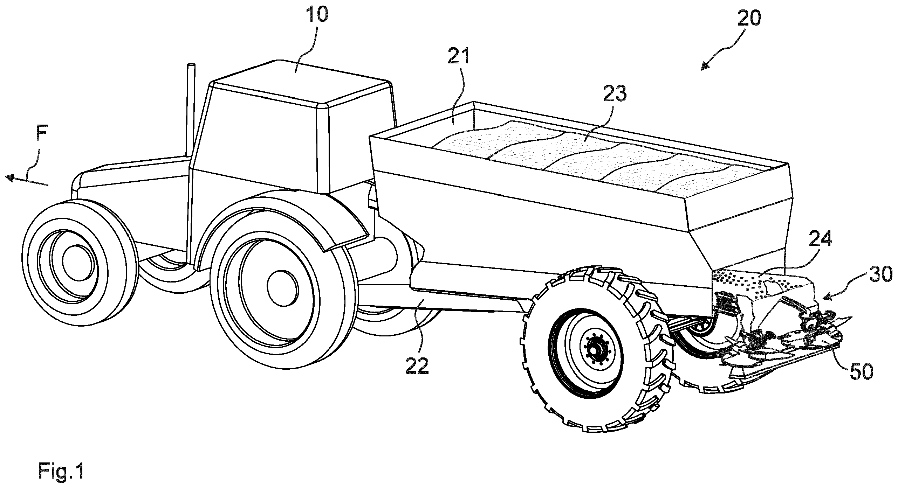

Eine landwirtschaftliche Verteilmaschine 20, die an ein Zugfahrzeug 10 über eine Deichsel 22 angekoppelt ist, ist in der Fig. 1 gezeigt. Die als Schleuderstreuer ausgebildete Verteilmaschine 20 umfasst zum Bevorrateten von granularem Material 23, insbesondere Saatgut und/oder Dünger, einen Vorratsbehälter 21. Im unteren Bereich des Vorratsbehälters 21 ist eine als Transportband 24 ausgebildete Dosiereinrichtung angeordnet mittels der das granulare Material 23 in einstellbaren Mengen aus dem Vorratsbehälter 21 entgegen der Fahrtrichtung F hin zu einer Übergabeeinrichtung 30 förderbar ist. Das von der Dosiereinrichtung 24 in die Übergabeeinrichtung 30 einleitbare Material 23 ist durch die Übergabeeinrichtung 30 zwei in vertikaler Richtung darunter angeordneter und jeweils um eine im wesentlichen vertikale Drehachse R rotatorisch antreibbarer Streuscheiben 50 zuführbar. Die Streuscheiben 50 sind dazu eingerichtet, dass darauf zuführbare granulare Material 23 in Form zumindest eines Streufächers auf einer, insbesondere landwirtschaftlichen, Fläche zu verteilen.

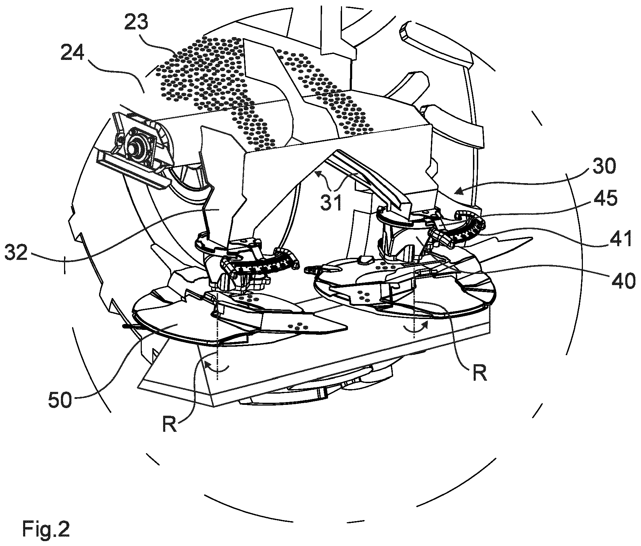

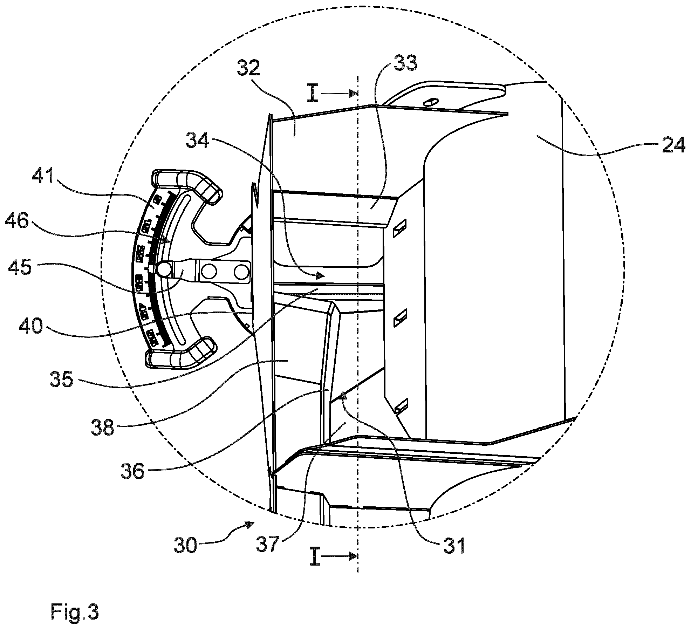

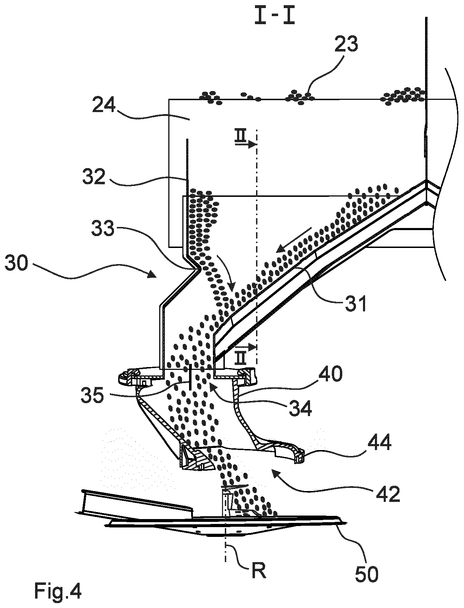

Die zwischen der Dosiereinrichtung 24 und den Streuscheiben 50 angeordnete und zumindest teilweise als zwei spiegelsymmetrische trichterförmige Rutschen ausgebildete Übergabeeinrichtung 30 ist in der Fig. 2 gezeigt. Jeweils eine der trichterförmigen Rutschen umfasst zumindest eine erste Seitenwand 31 und jeweils eine der ersten Seitenwand 31 gegenüberliegende zweite Seitenwand 32. Das granulare Material 23 ist hierbei nahezu ausschließlich über die erste Seitenwand 31 in eine, in der Fig. 3 und Fig. 4 gezeigten, an die jeweils erste und zweite Seitenwand 31,32 anschließend angeordnete Durchflussöffnung 34 einleitbar. Wie in den Figuren 3 und 4 außerdem zu sehen ist, weist die zweite Seitenwand 32 einen in Richtung der ersten Seitenwand 31 sich erstreckenden Vorsprung 33 auf, der sich mit der Dosiereinrichtung 24 zumindest teilweise über der Durchflussöffnung 34 erstreckt. Mittels des Vorsprungs 33 ist das in vertikaler Richtung über der Durchflussöffnung 34 von der Dosiereinrichtung 24 in die Übergabeeinrichtung 30 einleitbare Material 23 auf die erste Seitenwand 31, die sich über eine größere Breite der Dosiereinrichtung 24 als die zweite Seitenwand 32 erstreckt, umleitbar. Somit ist eine Übergabeeinrichtung 30 erreicht, die einen besonders breiten Einleitbereich und damit eine besonders breite Dosiereinrichtung 24, insbesondere mit einer großen Fördermenge an granularem Material 23, erlaubt.

Darüber hinaus umfasst die Übergabeeinrichtung 30 ein Prallelement 35, das der Durchflussöffnung 34 zugeordnet ist und mittels der die Durchflussöffnung 34 in mehrere, insbesondere zwei, Teilöffnungen unterteilt ist. Das Prallelement 35 ist derartig innerhalb der Übergabeeinrichtung 30 angeordnet, dass das granulare Material 23 bei einer ersten Fördermenge über nur eine und bei einer zweiten Fördermenge, die größer als die erste Fördermenge ist, über zwei der mehreren Teilöffnungen der Durchflussöffnung 34 förderbar ist. Das Prallelement 35 erstreckt sich zusätzlich über einen bestimmten Abschnitt in vertikaler Richtung nach unten und lenkt somit das in die Teilöffnungen einleitbare Material 23 zumindest teilweise in eine nahezu ausschließliche vertikale Förderrichtung um.

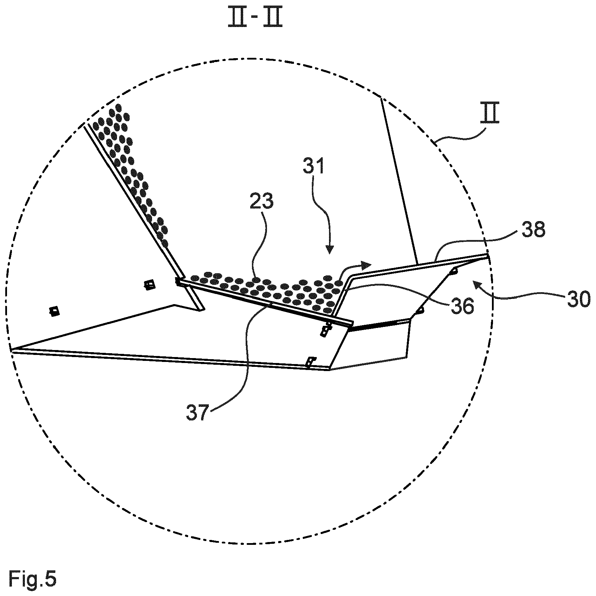

Außerdem weist die erste Seitenwand 31 eine in Längsrichtung verlaufende aufrecht hervorstehende Kante 36 auf, mittels der die erste Seitenwand 31 in eine erste und zweite Rutschfläche 37, 38 unterteilt ist und über die das granulare Material 23 in Abhängigkeit der Fördermenge förderbar ist. Die erste Rutschfläche 37 ist hierbei auf einer der Dosiereinrichtung 24 zugewandte Seite angeordnet. Die Höhe der Kante 36 ist derartig ausgebildet, dass die Kante 36 erst nach dem Erreichen der vierten Fördermenge zumindest teilweise in Pfeilrichtung, wie in Fig. 5 dargestellt, vom geförderten Material 23 überschreitbar ist. Somit ist das granulare Material 23 bei einer ersten und/oder zweiten Fördermenge zumindest teilweise über die erste Rutschfläche 37 und bei einer dritten Fördermenge, die größer oder gleich der zweiten Fördermenge ist, zumindest teilweise über die zweite Rutschfläche 38 zur Durchflussöffnung 34 förderbar.

Des Weiteren umfasst die Übergabeeinrichtung 30 eine an die Durchflussöffnung 34 anschließend, insbesondere zwischen der trichterförmigen Rutsche und der Streuscheibe 50, angeordnete drehbare Trichterspitze 40. Das über die Durchflüssöffnung 34 in die Trichterspitze 40 einleitbare granulare Material 23 ist über zumindest eine innenliegende Fläche in der Trichterspitze 40 an eine daran anschließende Ausgabeöffnung 42 förderbar. Ausgehend von der Ausgabeöffnung 42 ist das granulare Material 23 mittels der Trichterspitze 40 an zumindest einen Aufgabepunkt A auf der Streuscheibe 50 übergebbar. Der Aufgabepunkt A ist hierbei über die Trichterspitze 40, insbesondere konzentrisch zur Drehachse R der Streuscheibe 50, verstellbar. Alternativ ist die Trichterspitze 40 derartig ausgebildet, dass der Aufgabepunkt A, alternativ und/oder zusätzlich, in einer Richtung quer zur Drehachse R verstellbar ist.

Die Trichterspitze 40 ist erfindungsgemäß lösbar, insbesondere formschlüssig, unterhalb und/oder im Bereich der Durchflussöffnung 34, mit der trichterförmigen Rutsche verbunden. Die Formschlussverbindung ist derartig ausgebildet, dass die Trichterspitze 40 in einem bestimmten Bereich zwischen zumindest zwei Positionen, insbesondere feststellbar um die Drehachse R, verstellbar ist. Die mittels der Trichterspitze 40 einstellbare Position, insbesondere ein um die Drehachse R einstellbarer Winkel, ist über ein der Übergabeeinrichtung 30 zugeordnetes Anzeigemittel 41 ablesbar. Im gezeigten Ausführungsbeispiel ist das Anzeigemittel 41 im oberen Bereich an der Trichterspitze 40 angeformt und aus dem gleichen Werkstoff wie die Trichterspitze 40 ausgebildet. Alternativ und/oder zusätzlich kann das Anzeigemittel 41 hierbei auch zumindest teilweise mit der Trichterspitze 40 verbunden sein. Das Anzeigemittel 41 umfasst im dargestellten Ausführungsbeispiel ein Zeigerelement 45 und eine auf dem Anzeigemittel 41 aufgebrachte Beschriftung. Je nach Stellung des Zeigerelementes 45 über der Beschriftung ist die einstellbare Position von einem Bediener ablesbar.

Alternativ und/oder zusätzlich ist bei einer, insbesondere mittels eines Aktors, automatisierten Verstellung der Trichterspitze 40 ein digitales Anzeigemittel 41 denkbar. Hierbei kann das Anzeigemittel 41 im Bereich der Übergabeeinrichtung 30 und/oder im Zugfahrzeug 10 angeordnet sein.

Zur Festsetzung der Position weist das Zeigerelement 45 eine durch das Anzeigemittel 41, insbesondere durch eine auf dem Anzeigemittel 41 ausgebildete Kulisse 46, ragende Schraube mittels der die Trichterspitze 40, insbesondere das Anzeigemittel 41, über eine auf die Schraube aufschraubbare Flügelmutter fixierbar ist.

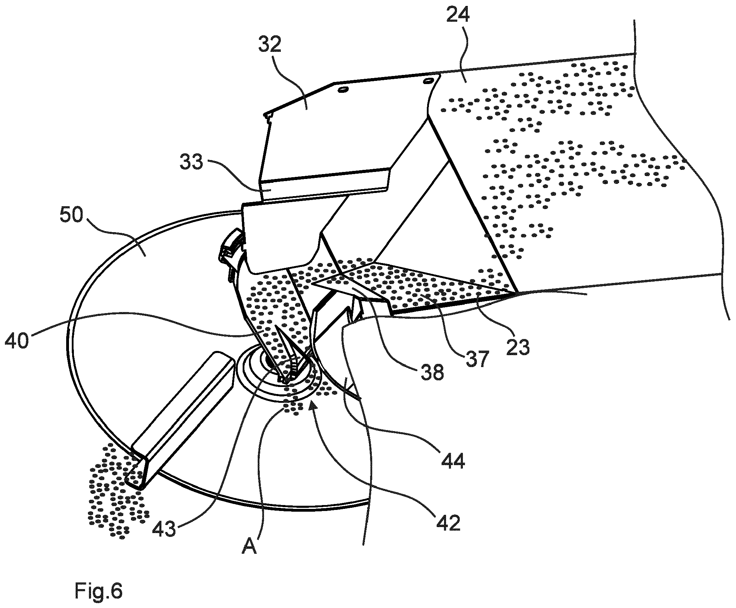

Die Fig. 6 zeigt den Förderweg des granularen Materials 23 von der Übergabeeinrichtung 30 zur Streuscheibe 50 in einer detaillierten Darstellung. Das granulare Material 23 ist hierbei bis zum Überschreiten einer vierten Fördermenge über ein auf der innenliegenden Fläche der Trichterspitze 40 angeformtes Leitelement 43 zumindest teilweise in mehrere Förderströme aufteilbar. Alternativ und/oder zusätzlich ist darüber hinaus ein zumindest teilweise mit dem Trichterelement 41, insbesondere form- und/oder kraft- und/oder stoffschlüssig, verbundenes Leitelement 43 denkbar. Das Leitelement 43 ist, insbesondere im unteren Bereich auf der innenliegenden Fläche der Trichterspitze 40 ausgebildet, wobei sich die Breite des Leitelementes 43 von einem Ursprung in Richtung der Ausgabeöffnung vergrößert. Somit ist das Leitelement 43 dazu eingerichtet, dass auf dem Aufgabepunkt A aufbringbare Material 23 derartig umzuleiten, dass der Größenunterschied, insbesondere Breitenunterschied, des Aufgabepunktes A bei kleinen und großen Fördermengen zumindest teilweise kompensierbar ist. Somit ist bei einer schwankenden Fördermenge eine nahezu gleichbleibende Aufbringgenauigkeit des granularen Materials 23 auf der Streuscheibe 50 und damit ein verbessertes Streuergebnis der Verteilmaschine 20 erreicht.

Darüber hinaus umfasst die Trichterspitze 40 zumindest ein im unteren Bereich, insbesondere anschließend an die Ausgabeöffnung 42, angeordnetes Rückprallelement 44. Das Rückprallelement 44 ist insbesondere dazu eingerichtet, von der Streuscheibe 50, insbesondere in vertikaler Richtung nach oben, zurückgepralltes Material 23 zumindest teilweise im Bereich der Streuscheibe 50 zu halten und/oder das Material 23 an die Streuscheibe 50 zurückzuführen. Das Rückprallelement 44 erstreckt sich hierbei zumindest teilweise von der Außenkontur der Ausgabeöffnung 42 in Richtung des Außenradius der Streuscheibe 50. Im gezeigten Ausführungsbeispiel ist das Rückprallelement 44 an der Trichterspitze 40 angeformt, wobei die Werkstoffe des Rückprallelementes 44 und der Trichterspitze 40 aus dem gleichen Werkstoff ausgebildet sind. In einer alternativen nicht gezeigten Ausführungsform kann das Rückprallelement 44 kraft- und/oder form- und/oder stoffschlüssig mit der Trichterspitze 40 zumindest teilweise verbunden sein.

### Bezugszeichenliste

- 10: Zugfahrzeug
- 20: Verteilmaschine
- 21: Vorratsbehälter
- 22: Deichsel
- 23: Granulares Material
- 24: Dosiereinrichtung, Transportband
- 30: Übergabeeinrichtung
- 31: Erste Seitenwand
- 32: Zweite Seitenwand
- 33: Vorsprung
- 34: Durchflussöffnung
- 35: Prallelement
- 36: Kante
- 37: Erste Rutschfläche
- 38: Zweite Rutschfläche
- 40: Trichterspitze
- 41: Anzeigemittel
- 42: Ausgabeöffnung
- 43: Leitelement
- 44: Rückprallelement
- 45: Zeigerelement
- 46: Kulisse
- 50: Streuscheibe

- A: Aufgabepunkt
- F: Fahrtrichtung
- R: Drehachse

## Patentansprüche

1. Verteilmaschine (20), insbesondere landwirtschaftliche Verteilmaschine (20), zum Ausbringen von granularem Material (23), insbesondere Saatgut und/oder Düngemittel, umfassend zumindest einen Vorratsbehälter (21) zur Bevorratung des auszubringenden Materials (23), zumindest eine einstellbare Dosiereinrichtung (24), insbesondere ein Transportband, die im unteren Bereich des Vorratsbehälters (21) antreibbar angeordnet und dazu eingerichtet ist, dass bevorratete Material (23) aus dem Vorratsbehälter (21) zumindest einer um eine im Wesentlichen vertikale Drehachse rotatorisch antreibbare Streuscheibe (50) zuzuführen, und zumindest eine Übergabeeinrichtung (30) die zwischen der Dosiereinrichtung (24) und der Streuscheibe (50) angeordnet und zumindest teilweise als trichterförmige Rutsche ausgebildet ist, wobei die Übergabeeinrichtung (30) dazu eingerichtet ist, dass mittels der Dosiereinrichtung (24) geförderte Material (23) auf die zumindest eine Streuscheibe (50) zu übergeben, wobei die trichterförmige Rutsche zumindest abschnittsweise wenigstens eine erste Seitenwand (31) und wenigstens eine der ersten Seitenwand (31) gegenüberliegenden zweiten Seitenwand (32) umfasst, und wobei zumindest eine Durchflussöffnung (34) an die wenigstens eine erste und zweite Seitenwand (32) anschließend angeordnet ist, **dadurch gekennzeichnet, dass** die wenigstens eine zweite Seitenwand (32) zumindest einen in Richtung der ersten Seitenwand (31) erstreckenden Vorsprung (33) aufweist, wobei der Vorsprung (33) und die Dosiereinrichtung (24) derartig ausgebildet sind und sich zumindest teilweise über die Durchflussöffnung (34) erstrecken, dass das granulare Material (23) nahezu ausschließlich über die wenigstens eine erste Seitenwand (31) in die Durchflussöffnung (34) einleitbar ist.

2. Verteilmaschine (20) nach Anspruch 1, **dadurch gekennzeichnet, dass** sich die wenigstens eine erste Seitenwand (31) über eine größere Breite der Dosiereinrichtung (24) erstreckt als die wenigstens eine zweite Seitenwand (32).

3. Verteilmaschine (20) nach zumindest einem der vorgenannten Ansprüche, **dadurch gekennzeichnet, dass** der zumindest einen Durchflussöffnung (34) zumindest ein Prallelement (35) zugeordnet ist, wobei die Durchflussöffnung (34) mittels des Prallelementes (35) in mehrere Teilöffnungen unterteilt ist.

4. Verteilmaschine (20) nach Anspruch 3, **dadurch gekennzeichnet, dass** das granulare Material (23) bei einer ersten Fördermenge über zumindest eine der mehreren Teilöffnungen und bei einer zweiten Fördermenge, die größer als die erste Fördermenge ist, über zumindest eine weitere der mehreren Teilöffnungen förderbar ist.

5. Verteilmaschine (20) nach zumindest einem der vorgenannten Ansprüche, **dadurch gekennzeichnet, dass** die wenigstens eine erste Seitenwand (31) zumindest eine in Längsrichtung verlaufende im Wesentlichen aufrecht hervorstehende Kante (36) aufweist und die wenigstens eine erste Seitenwand (31) mittels der Kante (36) in zumindest eine erste Rutschfläche (37) und zumindest eine zweite Rutschfläche (38) unterteilt ist.

6. Verteilmaschine (20) nach Anspruch 5, **dadurch gekennzeichnet, dass** die zumindest eine erste Rutschfläche (37) auf einer der Dosiereinrichtung (24) zugewandten Seite angeordnet ist.

7. Verteilmaschine (20) nach zumindest einem der der vorgenannten Ansprüche 5 - 6, **dadurch gekennzeichnet, dass** das granulare Material (23) bei einer ersten und/oder zweiten Fördermenge über die zumindest eine erste Rutschfläche (37) und bei einer dritten Fördermenge, die größer oder gleich der zweiten Fördermenge ist, zumindest teilweise über die zumindest eine zweite Rutschfläche (38) förderbar ist.

8. Verteilmaschine (20) nach zumindest einem der vorgenannten Ansprüche, wobei das granulare Material (23) auf zumindest einem, vorzugsweise definierten, Aufgabepunkt (A) auf der Streuscheibe (50) übergebbar ist, **dadurch gekennzeichnet, dass** die Übergabeeinrichtung (30) zumindest eine, vorzugsweise an die Durchflussöffnung (34) anschließende, drehbare Trichterspitze (40) umfasst und der Aufgabepunkt (A) mittels der Trichterspitze (40) konzentrisch zur Drehachse (R) der Streuscheibe (50) verstellbar ist.

9. Verteilmaschine (20) nach Anspruch 8, **dadurch gekennzeichnet, dass** die Trichterspitze (40) lösbar, vorzugsweise formschlüssig und/oder werkzeuglos, mit der trichterförmigen Rutsche koppelbar ist.

10. Verteilmaschine (20) nach zumindest einem der vorgenannten Ansprüche 8 - 9, **dadurch gekennzeichnet, dass** die Trichterspitze (40), vorzugsweise feststellbar, zwischen zumindest zwei unterschiedlichen Positionen um die Drehachse (R) verstellbar ist.

11. Verteilmaschine (20) nach zumindest einem der vorgenannten Ansprüche 8 - 10, **dadurch gekennzeichnet, dass** die Übergabeeinrichtung (30), insbesondere Trichterspitze (40), zumindest ein Anzeigemittel (41) umfasst, dass die Position der Trichterspitze (40) um die Drehachse (R) mittels des Anzeigemittels (41) ablesbar ist.

12. Verteilmaschine (20) nach zumindest einem der vorgenannten Ansprüche 8 - 11, **dadurch gekennzeichnet, dass** die Trichterspitze (40) zumindest eine Ausgabeöffnung (42) aufweist über die das geförderte Material (23) an den Aufgabepunkt (A) auf die Streuscheibe (50) übergebbar ist, wobei das granulare Material (23) über wenigstens eine innenliegende Fläche der Trichterspitze (40) zur Ausgabeöffnung (42) förderbar ist.

13. Verteilmaschine (20) nach Anspruch 12, **dadurch gekennzeichnet, dass** zumindest eine innenliegende Fläche der Trichterspitze (40) zumindest ein Leitelement (43) aufweist, wobei das geförderte Material (23) mittels des Leitelementes (43), vorzugsweise bis zum Überschreiten einer vierten Fördermenge, zumindest teilweise in mehrere Förderströme aufteilbar ist.

14. Verteilmaschine (20) nach zumindest einem der vorgenannten Ansprüche 8 - 13, **dadurch gekennzeichnet, dass** die Trichterspitze (40) im Bereich und/oder anschließend an der Ausgabeöffnung (42) zumindest ein Rückprallelement (44) aufweist.

15. Verteilmaschine (20) nach Anspruch 14, **dadurch gekennzeichnet, dass** sich das Rückprallelement (44) zumindest teilweise von einer Außenkontur der Ausgabeöffnung (42) in Richtung des Außenradius der Streuscheibe (50) erstreckt.

## Claims

1. Distribution machine (20), in particular agricultural distribution machine (20), for discharging granular material (23), in particular seed and/or fertilizer, comprising at least one storage container (21) for storing the material (23) to be dispensed; at least one adjustable metering device (24), in particular a transport belt, which is arranged so as to be drivable in the lower region of the storage container (21) and is configured to supply thee stored material (23) from the storage container (21) to at least one scattering disk (50) which can be driven in rotation about a substantially vertical rotation axis; and at least one transfer device (30) which is arranged between the metering device (24) and the scattering disc (50) and is designed at least in part as a funnel-shaped chute; wherein the transfer device (30) is configured to pass thee material (23) conveyed by means of the metering device (24) to the at least one scattering disc (50); wherein the funnel-shaped chute comprises, at least in portions, at least one first side wall (31) and at least one second side wall (32) opposing the first side wall (31); and wherein at least one flow-through opening (34) is arranged adjoining the at least one first and second side wall (32); **characterized in that** the at least one second side wall (32) has at least one projection (33) extending in the direction of the first side wall (31), wherein the projection (33) and the metering device (24) are designed and extend at least partially across the flow-through opening (34) such that the granular material (23) can be directed into the flow-through opening (34) nearly exclusively via the at least one first side wall (31).

2. Distribution machine (20) according to claim 1, **characterized in that** the at least one first side wall (31) extends over a greater width of the metering device (24) than the at least one second side wall (32).

3. Distribution machine (20) according to at least one of the aforementioned claims, **characterized in that** the at least one flow-through opening (34) is associated with at least one baffle element (35), wherein the flow-through opening (34) is subdivided by means of the baffle element (35) into a plurality of sub-openings.

4. Distribution machine (20) according to claim 3, **characterized in that** the granular material (23) can be conveyed at a first delivery rate via at least one of the plurality of sub-openings and, via at least one further of the plurality of sub-openings, at a second delivery rate that is greater than the first delivery rate.

5. Distribution machine (20) according to at least one of the aforementioned claims, **characterized in that** the at least one first side wall (31) has at least one edge (36) projecting essentially upright and in the longitudinal direction, and the at least one first side wall (31) is subdivided, by means of the edge (36), into at least one first slide surface (37) and at least one second slide surface (38).

6. Distribution machine (20) according to claim 5, **characterized in that** the at least one first slide surface (37) is arranged on a side facing toward the metering device (24).

7. Distribution machine (20) according to at least one of of the aforementioned claims 5 - 6, **characterized in that** the granular material (23) can be conveyed at a first and/or second delivery rate over the at least one first slide surface (37), and over the at least one second slide surface (38), at least in part, at a third delivery rate which is greater than or equal to the second delivery rate.

8. Distribution machine (20) according to at least one of the preceding claims, wherein the granular material (23) can be passed to at least one, preferably defined, feed point (A) at the scattering disc (50), **characterized in that** the transfer device (30) comprises at least one rotatable funnel tip (40), preferably adjacent to the flow-through opening (34), and the feed point (A) is adjustable concentric with the rotation axis (R) of the scattering disc (50) by means of the funnel tip (40).

9. Distribution machine (20) according to claim 8, **characterized in that** the funnel tip (40) can be coupled to the funnel-shaped chute so as to be releasable, preferably positively and/or without tools.

10. Distribution machine (20) according to at least one of the aforementioned claims 8 - 9, **characterized in that** the funnel tip (40) is adjustable between at least two different positions about the rotation axis (R), preferably so as to be fixable.

11. Distribution machine (20) according to at least one of the aforementioned claims 8 - 10, **characterized in that** the transfer device (30), in particular the funnel tip (40), comprises at least one display means (41), that the position of the funnel tip (40) about the rotation axis (R) can be read out by means of said display means (41).

12. Distribution machine (20) according to at least one of the aforementioned claims 8 - 11, **characterized in that** the funnel tip (40) has at least one dispensing opening (42) via which the conveyed material (23) can be passed to the feed point (A) at the scattering disc (50), wherein the granular material (23) can be conveyed via at least one internal surface of the funnel tip (40) to the dispensing opening (42).

13. Distribution machine (20) according to claim 12, **characterized in that** at least one internal surface of the funnel tip (40) has at least one guide element (43), wherein the conveyed material (23) can be divided up, at least in part, into a plurality of transport flows by means of the guide element (43), preferably until a fourth delivery rate is exceeded.

14. Distribution machine (20) according to at least one of the aforementioned claims 8 - 13, **characterized in that** the funnel tip (40) has at least one rebound element (44) in the region of and/or following the dispensing opening (42).

15. Distribution machine (20) according to claim 14, **characterized in that** the rebound element (44) extends at least partially, from an outer contour of the dispensing opening (42), in the direction of the outer radius of the scattering disc (50).

## Revendications

1. Machine d'épandage (20), en particulier machine d'épandage agricole (20), pour la décharge de matière granulaire (23), en particulier de semences et/ou d'engrais, comprenant au moins un réservoir de stockage (21) pour le stockage de la matière à décharger (23), au moins un dispositif de dosage réglable (24), en particulier une bande de transport, qui est disposée dans la zone inférieure du réservoir de stockage (21) de manière à pouvoir être entraînée et est conçue pour alimenter la matière stockée (23) hors du récipient de stockage (21) vers au moins un disque d'épandage (50) pouvant être entraîné en rotation autour d'un axe de rotation essentiellement vertical et au moins un dispositif de transfert (30) qui est disposé entre le dispositif de dosage (24) et le disque d'épandage (50) et est formé au moins partiellement comme une goulotte en forme d'entonnoir, dans laquelle le dispositif de transfert (30) est conçu pour transférer la matière (23) transportée au moyen du dispositif de dosage (24) à l'au moins un disque d'épandage (50), dans laquelle la goulotte en forme d'entonnoir comprend par sections au moins une première paroi latérale (31) et au moins une seconde paroi latérale (32) opposée à la première paroi latérale (31) et dans laquelle au moins une ouverture de passage (34) est disposée raccordée à l'au moins une première et l'au moins une seconde paroi latérale (32), **caractérisée en ce que** l'au moins un seconde paroi latérale (32) présente au moins une saillie (33) s'étendant en direction de la première paroi latérale (31), dans laquelle la saillie (33) et le dispositif de dosage (24) sont conçus et s'étendent au moins partiellement au-dessus de l'ouverture de passage (34) de telle sorte que la matière granulaire (23) puisse être introduite presque exclusivement au-dessus de l'au moins une première paroi latérale (31) dans l'ouverture de passage (34).

2. Machine d'épandage (20) selon la revendication 1, **caractérisée en ce que** l'au moins une première paroi latérale (31) s'étend au-dessus d'une largeur du dispositif de dosage (24) plus grande que l'au moins une seconde paroi latérale (32).

3. Machine d'épandage (20) selon au moins l'une des revendications précédentes, **caractérisée en ce qu'**au moins un élément de percussion (35) est associé à l'au moins une ouverture de passage (34), dans laquelle l'ouverture de passage (34) est divisée au moyen de l'élément de percussion (35) en plusieurs ouvertures partielles.

4. Machine d'épandage (20) selon la revendication 3, **caractérisée en ce que** la matière granulaire (23) peut être transportée, avec un premier débit, au-dessus d'au moins une des plusieurs ouvertures partielles et, avec un deuxième débit, qui est supérieur au premier débit, au-dessus d'au moins une autre des plusieurs ouvertures partielles.

5. Machine d'épandage (20) selon au moins l'une des revendications précédentes, **caractérisée en ce que** l'au moins une première paroi latérale (31) présente au moins un bord (36) en saillie essentiellement verticale s'étendant dans la direction longitudinale et l'au moins une première paroi latérale (31) est divisée, au moyen du bord (36) en au moins une première surface de glissement (37) et au moins une seconde surface de glissement (38).

6. Machine d'épandage (20) selon la revendication 5, **caractérisée en ce que** l'au moins une première surface de glissement (37) est disposée sur le côté orienté vers le dispositif de dosage (24).

7. Machine d'épandage (20) selon au moins l'une des revendications précédentes 5 - 6, **caractérisée en ce que** la matière granulaire (23), avec un premier et/ou un deuxième débit, peut être transportée au-dessus de l'au moins une première surface de glissement (37) et, avec un troisième débit, qui est supérieur ou égal au deuxième débit, au moins partiellement au-dessus de l'au moins une seconde surface de glissement (38).

8. Machine d'épandage (20) selon au moins l'une des revendications précédentes, dans laquelle la matière granulaire (23) peut être transférée vers au moins un point de chute (A), de préférence défini, sur le disque d'épandage (50), **caractérisée en ce que** le dispositif de transfert (30) comprend au moins un cône de trémie (40) rotatif, de préférence raccordé à l'ouverture de passage (34) et le point de chute (A) est réglable au moyen du cône de trémie (40) de manière concentrique à l'axe de rotation (R) du disque d'épandage (50).

9. Machine d'épandage (20) selon la revendication 8, **caractérisée en ce que** le cône de trémie (40) peut être couplé à la goulotte en forme d'entonnoir de manière amovible, de préférence par complémentarité de forme et/ou sans outil.

10. Machine d'épandage (20) selon au moins l'une des revendications précédentes 8 - 9, **caractérisée en ce que** le cône de trémie (40) est réglable, de préférence de manière détectable, entre au moins deux positions différentes autour de l'axe de rotation (R).

11. Machine d'épandage (20) selon au moins l'une des revendications précédentes 8 - 10, **caractérisée en ce que** le dispositif de transfert (30), en particulier le cône de trémie (40), comprend un moyen d'affichage (41), **en ce que** la position du cône de trémie (40) autour de l'axe de rotation (R) peut être lue au moyen du moyen d'affichage (41).

12. Machine d'épandage (20) selon au moins l'une des revendications précédentes 8 - 11, **caractérisée en ce que** le cône de trémie (40) présente au moins une ouverture de distribution (42), par le biais de laquelle la matière transportée (23) peut être transférée au point de chute (A) sur le disque d'épandage (50), dans laquelle la matière granulaire (23) peut être transportée par le biais d'au moins une surface intérieure du cône de trémie (40) vers l'ouverture de distribution (42).

13. Machine d'épandage (20) selon la revendication 12, **caractérisée en ce qu'**au moins une surface intérieure du cône de trémie (40) présente au moins un élément de guidage (43), dans laquelle la matière transportée (23) peut être répartie au moyen de l'élément de guidage (43), de préférence jusqu'à dépasser un quatrième débit, au moins partiellement en plusieurs flux de transport.

14. Machine d'épandage (20) selon au moins l'une des revendications précédentes 8 - 13, **caractérisée en ce que** le cône de trémie (40) présente, dans la zone de et/ou raccordé à l'ouverture de distribution (42), au moins un élément de rebond (44).

15. Machine d'épandage (20) selon la revendication 14, **caractérisée en ce que** l'élément de rebond (44) s'étend au moins partiellement depuis un contour externe de l'ouverture de distribution (42) en direction du rayon externe du disque d'épandage (50).
